# EUROPEAN PATENT APPLICATION

(11) **EP 2 690 525 A2**
(43) Date of publication of application: **29.01.2014**
(21) Application number: 13162981.8
(22) Date of filing: 09.04.2013
(51) Int. Cl.: G06F 3/01, G06F 3/03, H04N 5/00

(54) **Electronic apparatus, method of controlling the same, and computer-readable storage medium**

(30) Priority: 24.07.2012 KR 20120080804
(71) Applicant: Samsung Electronics Co., Ltd., Gyeonggi-do 443-742 (KR)
(72) Inventor: Song, Won-seok, Seoul (KR); Kim, Jong-sun, Gyeonggi-do (KR)
(74) Representative: Bray, Richard Anthony

(57) **Abstract**

An electronic apparatus, a method of controlling the same, and a non-transitory computer-readable storage medium are provided. The method includes: detecting an inclination of the electronic apparatus; recognizing a gesture command from an input image by taking into consideration the inclination of the electronic apparatus; and controlling the electronic apparatus to perform an operation according to the recognized gesture command.

## Description

### CROSS-REFERENCE TO RELATED PATENT APPLICATION

This application claims the priority benefit of Korean Patent Application No. 10-2012-0080804, filed on July 24, 2012, in the Korean Intellectual Property Office, the disclosure of which is incorporated herein in its entirety by reference.

### BACKGROUND

### 1. Field

Various embodiments of the invention relate to an electronic apparatus, a method of controlling the same, and a computer-readable storage medium.

### 2. Description of the Related Art

Since demand for intuitive manipulation of electronic devices is currently increasing, various technologies regarding methods of inputting a control signal from a user are being suggested. If intuitive and easy-to-use user interfaces of electronic devices are provided to users, user satisfaction may be increased and product competitiveness may also be increased. However, since intuitive and easy-to-use user interfaces have low accuracy in comparison to existing input methods such as key input methods, a solution for receiving a control input from a user without any error is required. Also, since electronic devices are used in various environments, a solution for recognizing a control input from a user without any error even in a variety of environments is required.

### SUMMARY

According to the present invention there is provided an apparatus and method as set forth in the appended claims. Other features of the invention will be apparent from the dependent claims, and the description which follows.

Various embodiments provide an electronic apparatus that may recognize a gesture command even if an inclination of the electronic apparatus changes when a gesture of a subject is recognized from an input image and the gesture command is received, a method of controlling the electronic apparatus, and a computer-readable storage medium.

According to an embodiment, a method of controlling an electronic apparatus includes: detecting an inclination of the electronic apparatus; recognizing a gesture command from an input image by taking into consideration the inclination of the electronic apparatus; and controlling the electronic apparatus to perform an operation according to the recognized gesture command.

The recognizing of the gesture command may include: rotating the input image according to the inclination of the electronic apparatus; and recognizing the gesture command from the rotated input image.

The recognizing of the gesture command may include: recognizing the gesture command by changing a direction of a previously defined gesture command according to the inclination of the electronic apparatus.

The detecting of the inclination of the electronic apparatus may include: detecting the inclination of the electronic apparatus using face detection information of a subject of the input image.

The method may further include: generating a live view from the input image by taking into consideration a rotation state of a display unit rotatably installed in the electronic apparatus and the inclination of the electronic apparatus; and displaying information regarding the recognized gesture command on the live view, wherein the displaying of the information includes: determining a display direction of the recognized gesture command according to the rotation state of the display unit and the inclination of the electronic apparatus, and displaying the information regarding the recognized gesture command.

The method may further include: providing feedback when the gesture command is recognized from the input image.

According to another embodiment, an electronic apparatus includes: a photographing unit that performs photoelectric conversion on incident light and generates an input image; an inclination detecting unit that detects an inclination of the electronic apparatus; a gesture recognizing unit that recognizes a gesture command from the input image by taking into consideration the inclination of the electronic apparatus; and a control unit that controls the electronic apparatus to perform an operation according to the recognized gesture command.

The gesture recognizing unit may rotate the input image according to the inclination of the electronic apparatus, and recognize the gesture command from the rotated input image.

The gesture recognizing unit may recognize the gesture command by changing a direction of a previously defined gesture command according to the inclination of the electronic apparatus.

The inclination detecting unit may detect the inclination of the electronic apparatus using face detection information of a subject of the input image.

The electronic apparatus may further include: a live view generating unit that generates a live view from the input image by taking into consideration a rotation state of a display unit rotatably installed in the electronic apparatus and the inclination of the electronic apparatus; a gesture information generating unit that provides information regarding the recognized gesture command on the live view; and the display unit displays the live view and the information regarding the recognized gesture command, wherein the gesture information generating unit determines a display direction of the recognized gesture command according to the rotation state of the display unit and the inclination of the electronic apparatus, and the display unit displays the information regarding the recognized gesture command.

The electronic apparatus may further include: a feedback providing unit that provides feedback when the gesture command is recognized from the input image.

According to another embodiment, a non-transitory computer-readable storage medium having embodied thereon a program for executing a method of controlling an electronic apparatus when the program is read and executed by a processor, wherein the method includes: detecting an inclination of the electronic apparatus; recognizing a gesture command from an input image by taking into consideration the inclination of the electronic apparatus; and controlling the electronic apparatus to perform an operation according to the recognized gesture command.

### BRIEF DESCRIPTION OF THE DRAWINGS

The above and other features and advantages will become more apparent by describing in detail exemplary embodiments thereof with reference to the attached drawings in which:
FIG. 1 is a diagram showing how to input a gesture command, according to an embodiment;
FIG. 2 is a block diagram of a structure of an electronic apparatus, according to an embodiment;
FIG. 3 is a block diagram illustrating an example of a previously defined gesture command, according to an embodiment;
FIG. 4 is a flowchart showing a method of controlling an electronic apparatus, according to an embodiment;
FIGS. 5A through 5C are diagrams illustrating a method of recognizing a gesture command in consideration of an inclination of an electronic apparatus, according to an embodiment;
FIG. 6 is a table illustrating a method of recognizing a gesture command in consideration of an inclination of an electronic apparatus, according to another embodiment;
FIGS. 7A and 7B are diagrams illustrating a method of recognizing a gesture command in consideration of an inclination of an electronic apparatus, according to another embodiment;
FIG. 8 is a block diagram of a structure of an electronic apparatus, according to another embodiment;
FIGS. 9A and 9B are diagrams showing an exterior of the electronic apparatus of FIG. 8;
FIG. 10 is a diagram illustrating various arrangement states of the electronic apparatus of FIG. 8;
FIGS. 11A through 11c are diagrams illustrating live views and information regarding gesture commands displayed on a display unit, according to an embodiment;
FIG. 12 is a flowchart showing a method of controlling an electronic apparatus, according to another embodiment;
FIG. 13 is a block diagram of a structure of an electronic apparatus, according to another embodiment; and
FIG. 14 is a flowchart showing a method of controlling an electronic apparatus, according to another embodiment.

### DETAILED DESCRIPTION OF THE INVENTION

Hereinafter, exemplary embodiments will be described in greater detail with reference to the accompanying drawings. These embodiments are provided so that this disclosure will be thorough and complete and will fully convey the concept of the invention to those of ordinary skill in the art. In the following description, well-known functions or constructions are not described in detail if it is determined that they would obscure the invention due to unnecessary detail.

The present disclosure and drawings are not intended to restrict the scope of the invention and are only used to facilitate an understanding of the invention. The specific terms used in this disclosure should be interpreted as having a meaning that is consistent with their meaning in the context of the relevant art and will not be interpreted in an idealized or overly formal sense unless expressly so defined herein. As used herein, the term "and/or" includes any and all combinations of one or more of the associated listed items.

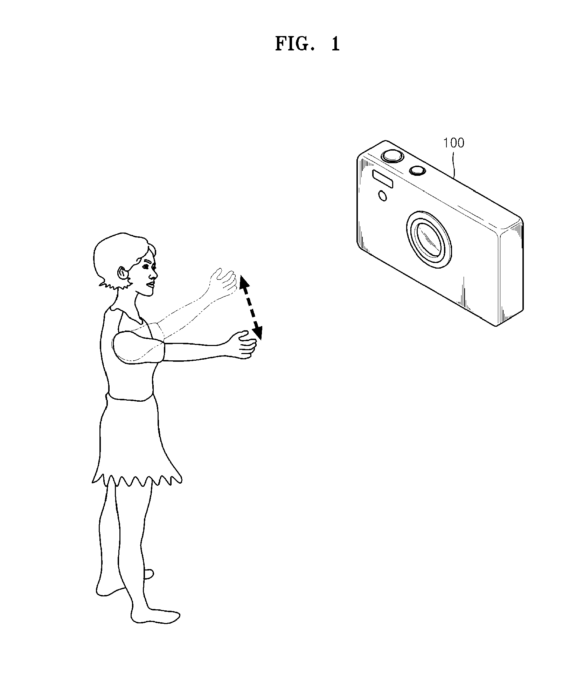

FIG. 1 is a diagram showing how to input a gesture command, according to an embodiment.

According to an embodiment, a user may manipulate an electronic apparatus 100 having a photographing function by using a gesture. For example, the user may input a shutter release signal by shaking a hand up and down, or may input a zoom-in signal by rotating a hand in a clockwise direction. The electronic apparatus 100 recognizes a gesture of the user in a captured input image, and thus recognizes a gesture command.

The user may use the electronic apparatus 100 not only in a normal horizontal position direction but also at a variety of inclinations, like rotating the electronic apparatus 100 at 90 degrees or 180 degrees, while manipulating the electronic apparatus 100. However, if an inclination of the electronic apparatus 100 changes, causing an input image to rotate at 90 degrees or 180 degrees, the electronic apparatus 100 may not recognize a gesture command intended by the user. According to embodiments, a method and apparatus capable of recognizing the gesture command intended by the user, even when the inclination of the electronic apparatus 100 changes, are provided.

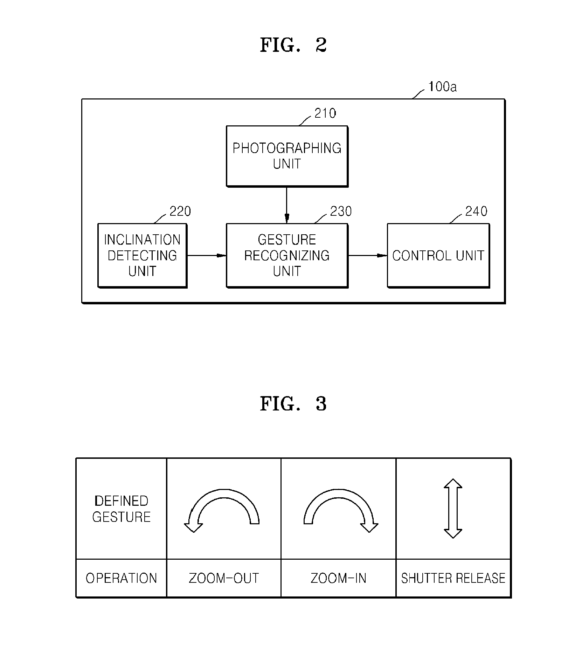

FIG. 2 is a block diagram of a structure of an electronic apparatus 100a, according to an embodiment.

The electronic apparatus 100a according to an embodiment includes a photographing unit 210, an inclination detecting unit 220, a gesture recognizing unit 230, and a control unit 240.

The photographing unit 210 generates an imaging signal by photoelectrically converting incident light, and generates an input image. The photographing unit 210 may include a lens, an iris, and an imaging device. The photographing unit 210 may focus the incident light on the imaging device, and may generate the imaging signal by photoelectrically converting the incident light by using the imaging device. Also, the photographing unit 210 may generate the input image by analog-to-digital conversion and encode the imaging signal. The imaging signal may be converted into the input image of, for example, a YCbCr or Joint Photographic Experts Group (JPEG) format.

The inclination detecting unit 220 detects an inclination of the electronic apparatus 100a. The inclination detecting unit 220 may include, for example, a gyro sensor, to detect the inclination of the electronic apparatus 100a. For another example, the inclination detecting unit 220 may detect the inclination of the electronic apparatus 100a from an input image. The inclination detected by the inclination detecting unit 220 may be expressed as, for example, 90 degrees, 180 degrees, etc.

The gesture recognizing unit 230 recognizes a gesture command from the input image according to the inclination of the electronic apparatus 100a. The gesture recognizing unit 230 may store a previously defined gesture command, and recognize the previously defined gesture command from the input image.

FIG. 3 is a block diagram illustrating an example of a previously defined gesture command, according to an embodiment.

The electronic apparatus 100a may detect a moving object from an input image, track the moving object, and recognize a gesture. For example, a user may input a gesture command into the electronic apparatus 100a by making a gesture with his or her hand in front of the electronic apparatus 100a.

The gesture command has a motion defined according to a form of the gesture. As shown in FIG. 3, a rotation gesture in a counterclockwise direction may indicate a zoom-out motion, and a rotation gesture in a clockwise direction may indicate a zoom-in motion. Also, an up and down gesture may indicate a shutter release motion.

However, if a user inputs an up and down gesture command corresponding to a shutter release when the electronic apparatus 100a is not in a normal horizontal position but has been rotated 90 degrees, the electronic apparatus 100a would identify the up and down gesture command input by the user as a left and right gesture command. Consequently, the electronic apparatus 100a, which has been rotated 90 degrees, does not recognize the up and down gesture command from the user as corresponding to the shutter release. According to various embodiments, since the gesture command is recognized according to an inclination of the electronic apparatus 100a, even when the inclination of the electronic apparatus 100a changes, the gesture command may be recognized. According to an embodiment, if the electronic apparatus 100a is inclined at 90 degrees and recognizes a left and right gesture, the left and right gesture may be recognized as an up and down gesture in consideration of the 90 degree inclination of the electronic apparatus 100a, and an input of the gesture command corresponding to the shutter release may be recognized.

If the gesture command is recognized, the control unit 240 controls the electronic apparatus 100a according to the recognized gesture command. For example, if a zoom-in gesture command is recognized, the control unit 240 controls the photographing unit 210 to perform a zoom-in operation. Also, if the shutter release gesture command is recognized, the control unit 240 controls the photographing unit 210 to perform a shutter release operation.

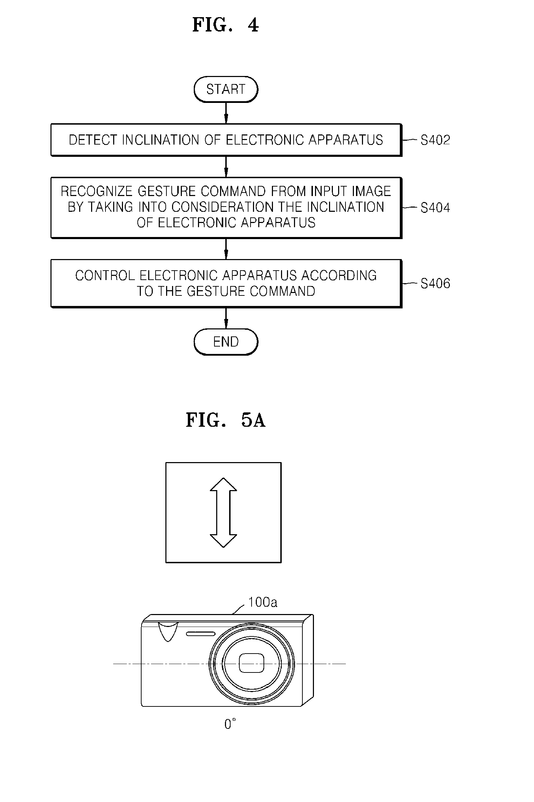

FIG. 4 is a flowchart showing a method of controlling the electronic apparatus 100a, according to an embodiment.

According to the method of controlling the electronic apparatus 100a according to an embodiment, an inclination of the electronic apparatus 100a is detected (operation S402). For example, it may be detected that the electronic apparatus 100a is inclined.

Also, the electronic apparatus 100a recognizes a gesture command from an input image generated from a photographing signal (operation S404). In this regard, the gesture command may be recognized according to the inclination of the electronic apparatus 100a.

Next, the electronic apparatus 100a is controlled according to the recognized gesture command (operation S406). For example, if a zoom-in gesture command is recognized, the photographing unit 210 is controlled to perform a zoom-in operation. Also, if a shutter release gesture command is recognized, the photographing unit 210 is controlled to perform a shutter release operation.

FIGS. 5A through 5C are diagrams illustrating a method of recognizing a gesture command in consideration of an inclination of the electronic apparatus 100a, according to an embodiment.

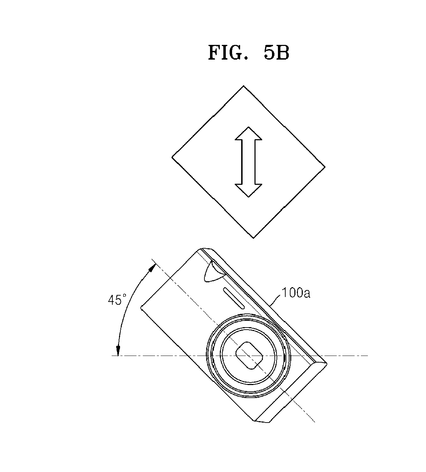

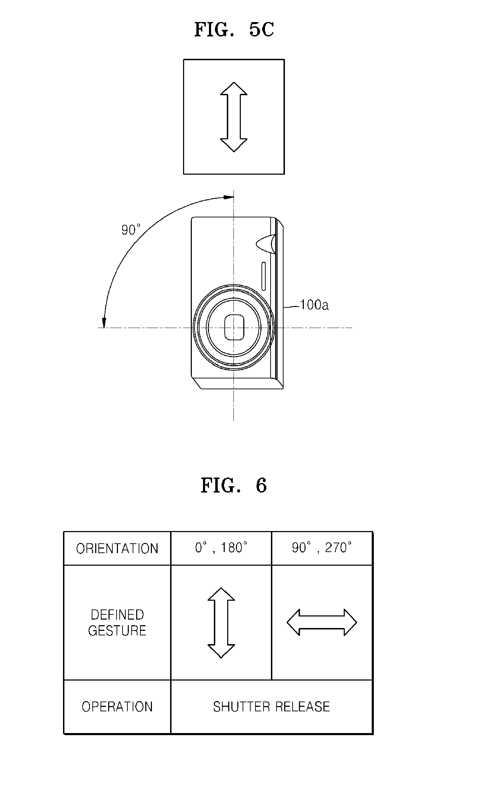

According to an embodiment, the gesture recognizing unit 230 may rotate an input image and recognize the gesture command according to the inclination of the electronic apparatus 100a. As shown in FIG. 5A, in a case where the inclination of the electronic apparatus 100a is 0 degrees, the gesture recognizing unit 230 recognizes the gesture command by not rotating the input image. Meanwhile, as shown in FIG. 5B, in a case where the inclination of the electronic apparatus 100a is 45 degrees in the clockwise direction, the gesture recognizing unit 230 recognizes the gesture command by rotating the input image 45 degrees in the counterclockwise direction. Also, as shown in FIG. 5C, in a case where the inclination of the electronic apparatus 100a is 90 degrees in the clockwise direction, the gesture recognizing unit 230 recognizes the gesture command by rotating the input image 90 degrees in the counterclockwise direction.

According to the present embodiment, the electronic apparatus 100a may recognize a defined gesture command and photograph a subject at any inclination.

FIG. 6 is a table illustrating a method of recognizing a gesture command in consideration of an inclination of the electronic apparatus 100a, according to another embodiment. In the present embodiment, an example of a gesture command corresponding to the shutter release of FIG. 3 is described.

According to the present embodiment, the gesture recognizing unit 230 recognizes the gesture command by changing a direction of a defined gesture command according to the inclination of the electronic apparatus 100a.

The gesture recognizing unit 230 rotates a gesture defined according to the inclination of the electronic apparatus 100a, matches the rotated gesture and a recognized gesture, and recognizes the gesture command. In this regard, as shown in FIG. 6, in a case where the inclination or orientation of the electronic apparatus 100a is 0 degrees or 180 degrees, a gesture defined corresponding to a shutter release command (e.g., up and down motion) may be recognized without being rotated. In a case where the inclination or orientation of the electronic apparatus 100a is 90 degrees or 270 degrees, the gesture defined corresponding to the shutter release command may be rotated by 90 degrees or 270 degrees and may match with the recognized gesture.

Although an example of the electronic apparatus 100a that rotates by 0 degrees, 90 degrees, 180 degrees, and 270 degrees is shown in FIG. 6, the defined gesture may be rotated according to various inclinations of the electronic apparatus 100a.

According to the present embodiment, the inclination of the electronic apparatus 100a may be determined by simple signal processing without giving a heavy load to the electronic apparatus 100a.

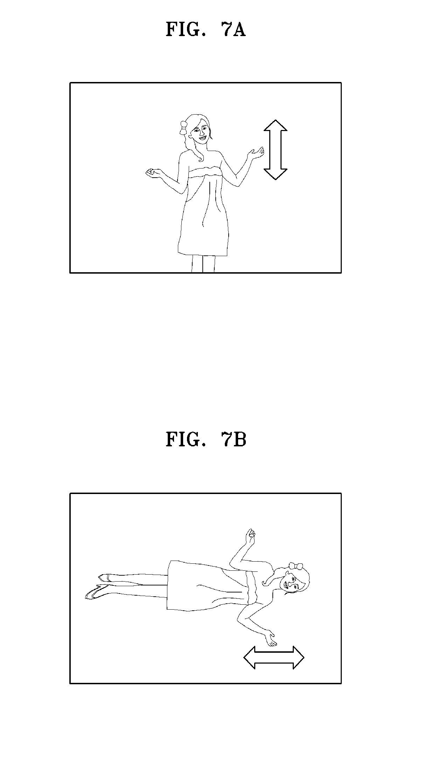

FIGS. 7A and 7B are diagrams for explaining a method of recognizing a gesture command in consideration of an inclination of the electronic apparatus 100a, according to another embodiment.

According to the present embodiment, the inclination detecting unit 220 performs face recognition on an input image and detects the inclination of the electronic apparatus 100a. For example, the inclination detecting unit 220 may recognize a face from the input image and detect the inclination of the electronic apparatus 100a from an arrangement of two eyes. For example, the inclination detecting unit 220 may detect a 0 degree inclination of the electronic apparatus 100a in a case of FIG. 7A, and a 90 degree inclination of the electronic apparatus 100a in a case of FIG. 7B.

According to the present embodiment, an additional component such as a gyro sensor is not necessary for detecting the inclination of the electronic apparatus 100a, thereby allowing a reduction in weight of the electronic apparatus 100a, and reducing manufacturing costs.

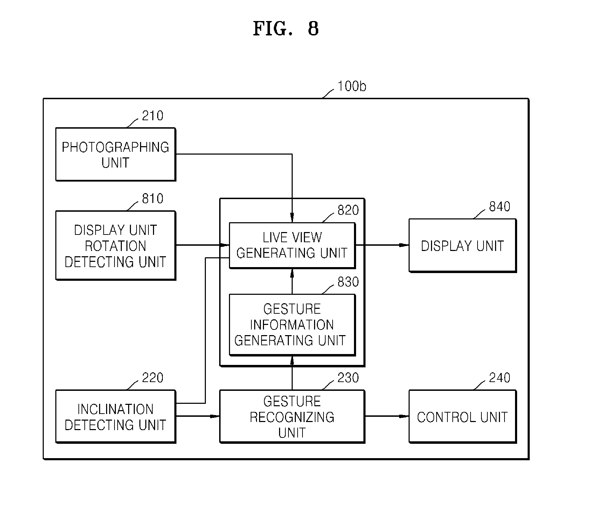

FIG. 8 is a block diagram of a structure of an electronic apparatus 100b, according to another embodiment.

The electronic apparatus 100b according to another embodiment may include the photographing unit 210, the inclination detecting unit 220, the gesture recognizing unit 230, the control unit 240, a display unit rotation detecting unit 810, a live view generating unit 820, a gesture information generating unit 830, and a display unit 840.

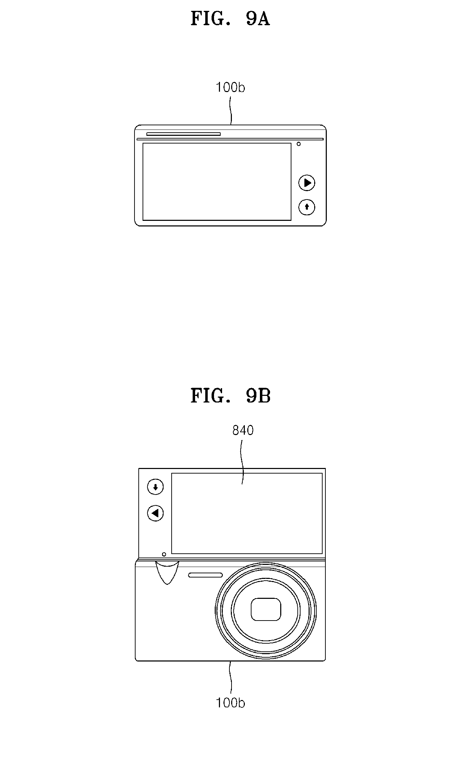

FIGS. 9A and 9B are diagrams showing an exterior of the electronic apparatus 100b of FIG. 8.

The electronic apparatus 100b includes the display unit 840 that is attached to the electronic apparatus 100b, and the display unit 840 is rotatably disposed as shown in FIGS. 9A and 9B. The display unit 840 may be flipped with respect to a hinge. FIG. 9A shows a state of the display unit 840 disposed in the rear of the electronic apparatus 100b. FIG. 9B shows a state of the display unit 840 unfolded in a front direction of the electronic apparatus 100b. According to the present embodiment, a display image of the display unit 840 may rotate or may be reversed in the up and down direction according to a rotation state of the display unit 840. In the states of the display unit 840 shown in FIGS. 9A and 9B, a rotation state of the display unit 840 changes by 180 degrees, and thus a state of the image displayed on the display unit 840 may change according to the rotation state of the display unit 840. For example, when the state of the display unit 840 changes from FIG. 9A to FIG. 9B, the image displayed on the display unit 840 may rotate by 180 degrees or may be reversed in the up and down direction.

The display unit rotation detecting unit 810 detects the rotation state of the display unit 840 and provides the live view generating unit 820 with information regarding the rotation state of the display unit 840 when the display unit 840 rotates as shown in FIGS. 9A and 9B. The information regarding the rotation state of the display unit 840 may be, for example, information regarding a rotation of the display unit 840 with respect to a hinge axis. For another example, the information regarding the rotation state of the display unit 840 may indicate whether the display unit 840 is disposed in the rear of the electronic apparatus 100b or faces in the front direction thereof. The rotation state of the display unit 840 may be detected using, for example, a sensor disposed in the hinge attached to the display unit 840.

The photographing unit 210 performs photoelectric conversion on incident light, generates an imaging signal from the incident light, and generates an input image from the imaging signal.

The inclination detecting unit 220 detects an inclination of the electronic apparatus 100b.

The live view generating unit 820 generates a live view from the input image according to the rotation state of the display unit 840 and the inclination of the electronic apparatus 100b, and provides the display unit 840 with the live view. The live view generating unit 820 rotates the live view or reverses the live view in the up and down direction according to the rotation state of the display unit 840. Also, the live view generating unit 820 may rotate the live view according to the inclination of the electronic apparatus 100b.

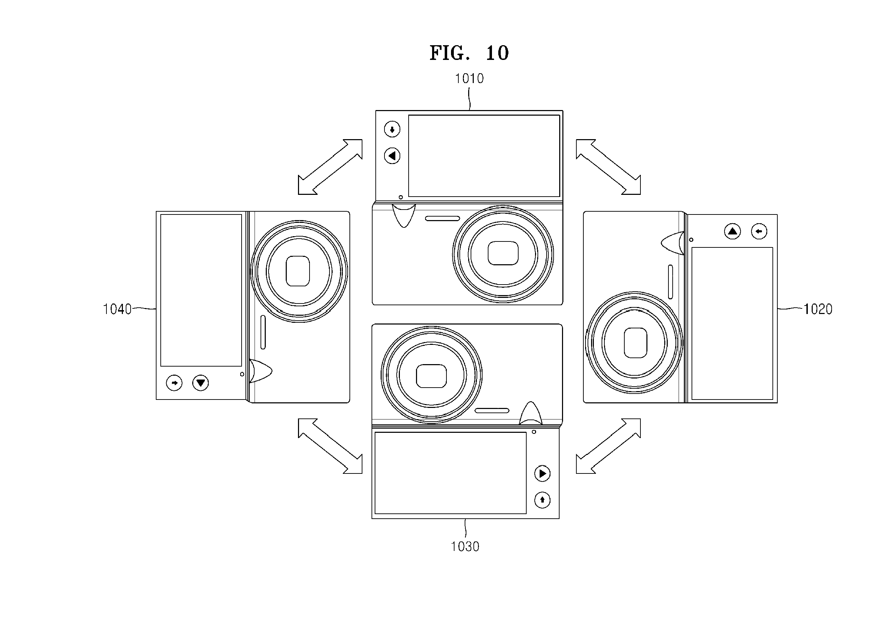

FIG. 10 is a diagram illustrating various arrangement states of the electronic apparatus 100b of FIG. 8.

The live view generating unit 820 according to the present embodiment may rotate an image displayed on the display unit 840 according to an inclination of the electronic apparatus 100b. For example, if a first state 1010 of the electronic apparatus 100b is changed to a second state 1020 thereof by rotating the electronic apparatus 100b clockwise by 90 degrees, the image that is rotated counterclockwise by 90 degrees is displayed on the display unit 840. Also, if the first state 1010 of the electronic apparatus 100b is changed to a third state 1030 thereof by rotating the electronic apparatus 100b clockwise by 180 degrees, the image that is rotated counterclockwise by 180 degrees is displayed on the display unit 840. If the first state 1010 of the electronic apparatus 100b is changed to a fourth state 1040 thereof by rotating the electronic apparatus 100b counterclockwise by 90 degrees, the image that is rotated clockwise by 90 degrees is displayed on the display unit 840.

The gesture recognizing unit 230 recognizes a gesture command from an input image according to the inclination of the electronic apparatus 100b. According to the present embodiment, if the gesture recognizing unit 230 recognizes the gesture command, the gesture recognizing unit 230 provides the gesture information generating unit 830 with information regarding the recognized gesture command.

The gesture information generating unit 830 generates the information regarding the recognized gesture command that is to be displayed on a live view and provides the live view generating unit 820 with the information. The information regarding the gesture command may include an icon, an arrow, a current set value, etc. and may be disclosed on the live view.

The live view generating unit 820 displays the information regarding the gesture command on the live view according to a rotation state of the display unit 840 and the inclination of the electronic apparatus 100b.

The display unit 840 displays the live view and the information regarding the gesture command provided by the live view generating unit 820.

The control unit 240 controls the electronic apparatus 100b according to the recognized gesture command.

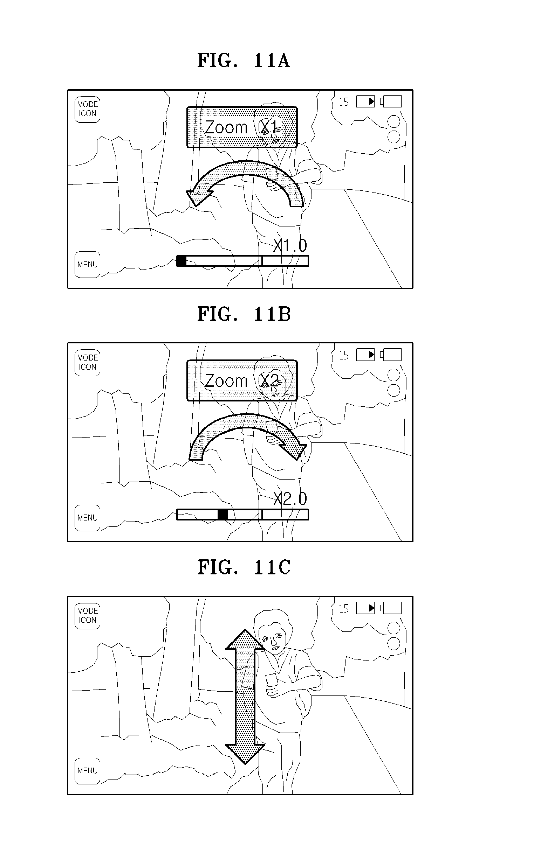

FIGS. 11A through 11C are diagrams illustrating live views and information regarding gesture commands displayed on the display unit 840, according to an embodiment. In this regard, it is assumed that the gesture command is defined as shown in FIG. 3.

FIG. 11A shows a case where a gesture command corresponding to zoom-out is recognized. FIG. 11B shows a case where a gesture command corresponding to zoom-in is recognized. According to the present embodiment, as shown in FIGS. 11A and 11B, icons indicating the recognized gesture commands, an explanation of the recognized gesture commands, and information regarding photographing setting values adjusted according to the recognized gesture commands may be displayed on the live view.

FIG. 11C shows a case where a gesture command corresponding to a shutter release is recognized. In the case where the gesture command corresponding to the shutter release is recognized, as shown in FIG. 11C, an icon indicating the recognized gesture command may be displayed on the live view.

When the information regarding the gesture commands is displayed on the live view as shown in FIGS. 11A through 11C, the live view generating unit 820 may rotate the live views and the information regarding the gesture commands according to a rotation state of the display unit 840 and an inclination of the electronic apparatus 100b, or reverse the live views and the information regarding the gesture commands in the up and down direction or the right and left direction.

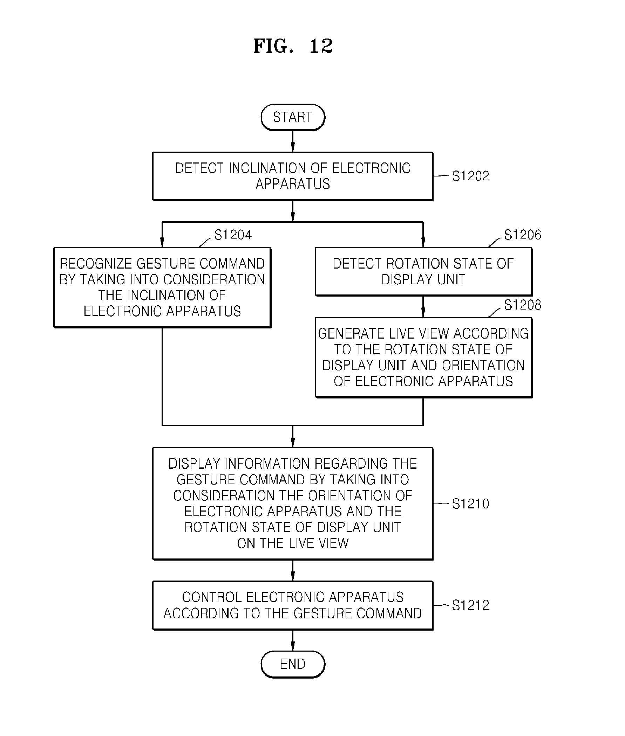

FIG. 12 is a flowchart showing a method of controlling the electronic apparatus 100b, according to another embodiment.

According to the present embodiment, an inclination of the electronic apparatus 100b is detected (operation S1202).

If the inclination of the electronic apparatus 100b is detected, a gesture command is recognized from an input image according to the inclination of the electronic apparatus 100b (operation S1204).

Also, according to the present embodiment, an operation of generating a live view is performed along with the operation of recognizing the gesture command. A rotation state of the display unit 840 is detected (operation S1206), and a live view is generated according to the rotation state of the display unit 840 and the inclination or orientation of the electronic apparatus 100b (operation S1208).

Next, information regarding the recognized gesture command is displayed on the live view according to the rotation state of the display unit 840 and the inclination or orientation of the electronic apparatus 100b (operation S1210).

Also, the electronic apparatus 100b is controlled to perform an operation according to the recognized gesture command (operation S1212).

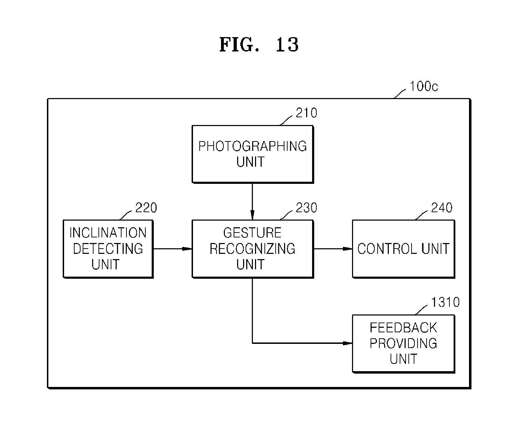

FIG. 13 is a block diagram of a structure of an electronic apparatus 100c, according to another embodiment.

The electronic apparatus 100c according to the present embodiment includes the photographing unit 210, the inclination detecting unit 220, the gesture recognizing unit 230, the control unit 240, and a feedback providing unit 1310.

The feedback providing unit 1310 according to the present embodiment provides feedback when a gesture command is recognized from an input image. For example, the feedback providing unit 1310 may provide the feedback indicating that the gesture command is recognized by changing a color of a display light disposed in the front of the electronic apparatus 100c, lighting the display light, or blinking the display light, or may provide the feedback indicating a type of the recognized gesture command. As another example, the feedback providing unit 1310 may provide the feedback indicating that the gesture command is recognized using a sound or may provide the feedback indicating a type of the recognized gesture command.

In the present embodiment, the feedback indicating whether the gesture command is recognized or the feedback indicating a type of the recognized gesture command is provided to a user from the electronic apparatus 100c, thereby increasing a success rate of the recognition of the gesture command.

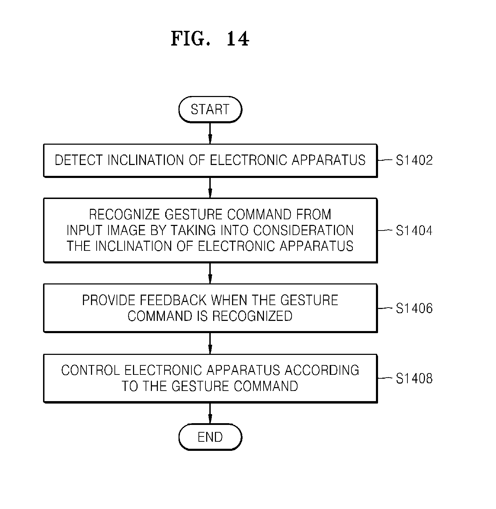

FIG. 14 is a flowchart showing a method of controlling an electronic apparatus, according to another embodiment.

According to the present embodiment, an inclination of the electronic apparatus 100c is detected (operation S1402).

Next, a gesture command is recognized from an input image according to the inclination of the electronic apparatus 100c (operation S1404).

When the gesture command is recognized, the electronic apparatus 100c provides a user with feedback by using a method of lighting a display light, blinking the display light, changing a color of the display light, or sound (operation S1406). The feedback may include information regarding whether the gesture command is recognized and/or information regarding a type of the recognized gesture command.

The electronic apparatus 100c is controlled to perform an operation according to the recognized gesture command (operation S1408).

All references, including publications, patent applications, and patents, cited herein are hereby incorporated by reference to the same extent as if each reference were individually and specifically indicated to be incorporated by reference and were set forth in its entirety herein.

The device described herein may comprise a processor, a memory for storing program data to be executed by the processor, a permanent storage such as a disk drive, a communications port for handling communications with external devices, and user interface devices, including a display, keys, etc. When software modules are involved, these software modules may be stored as program instructions or computer readable codes executable on the processor on a computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code may be stored and executed in a distributed fashion. This media can be read by the computer, stored in the memory, and executed by the processor.

For the purposes of promoting an understanding of the principles of the invention, reference has been made to the preferred embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that may be executed on one or more processors. Furthermore, the invention could employ any number of conventional techniques for electronics configuration, signal processing and/or control, data processing and the like. The words "mechanism," "unit," "structure," "means," "construction," and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

The use of the terms "a", "an", "the", and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed.

According to embodiments of the invention, when a gesture of a subject is recognized from an input image and a gesture command is received, even when an inclination of the electronic apparatus changes, the gesture command may be recognized by the electronic apparatus.

While the invention has been particularly shown and described with reference to exemplary embodiments thereof, it will be understood by those of ordinary skill in the art that various changes in form and details may be made therein without departing from the spirit and scope of the invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling an electronic apparatus, the method comprising:
detecting an inclination of the electronic apparatus;
recognizing a gesture command from an input image by taking into consideration the inclination of the electronic apparatus; and
controlling the electronic apparatus to perform an operation according to the recognized gesture command.

2. The method of claim 1, wherein the recognizing of the gesture command comprises:
rotating the input image according to the inclination of the electronic apparatus; and
recognizing the gesture command from the rotated input image.

3. The method of claim 1, wherein the recognizing of the gesture command comprises:
recognizing the gesture command by changing a direction of a previously defined gesture command according to the inclination of the electronic apparatus.

4. The method of claim 1, wherein the detecting of the inclination of the electronic apparatus comprises:
detecting the inclination of the electronic apparatus using face detection information of a subject of the input image.

5. The method of claim 1, further comprising:
generating a live view from the input image by taking into consideration a rotation state of a display unit rotatably installed on the electronic apparatus and the inclination of the electronic apparatus; and
displaying information regarding the recognized gesture command on the live view,
wherein the displaying of the information comprises:
determining a display direction of the recognized gesture command according to the rotation state of the display unit and the inclination of the electronic apparatus, and
displaying the information regarding the recognized gesture command.

6. The method of claim 1, further comprising:
providing feedback when the gesture command is recognized from the input image.

7. An electronic apparatus comprising:
a photographing unit that performs photoelectric conversion on incident light and generates an input image;
an inclination detecting unit that detects an inclination of the electronic apparatus;
a gesture recognizing unit that recognizes a gesture command from the input image by taking into consideration the inclination of the electronic apparatus; and
a control unit that controls the electronic apparatus to perform an operation according to the recognized gesture command.

8. The electronic apparatus of claim 7, wherein the gesture recognizing unit rotates the input image according to the inclination of the electronic apparatus, and recognizes the gesture command from the rotated input image.

9. The electronic apparatus of claim 7, wherein the gesture recognizing unit recognizes the gesture command by changing a direction of a previously defined gesture command according to the inclination of the electronic apparatus.

10. The electronic apparatus of claim 7, wherein the inclination detecting unit detects the inclination of the electronic apparatus using face detection information of a subject of the input image.

11. The electronic apparatus of claim 7, further comprising:
a live view generating unit that generates a live view from the input image by taking into consideration a rotation state of a display unit rotatably installed on the electronic apparatus and the inclination of the electronic apparatus;
a gesture information generating unit that provides information regarding the recognized gesture command on the live view; and
the display unit displays the live view and the information regarding the recognized gesture command,
wherein the gesture information generating unit determines a display direction of the recognized gesture command according to the rotation state of the display unit and the inclination of the electronic apparatus, and the display unit displays the information regarding the recognized gesture command.

12. The electronic apparatus of claim 7, further comprising:
a feedback providing unit that provides feedback when the gesture command is recognized from the input image.

13. A non-transitory computer-readable storage medium having embodied thereon a program for executing a method of controlling an electronic apparatus when the program is read and executed by a processor, wherein the method comprises:
detecting an inclination of the electronic apparatus;
recognizing a gesture command from an input image by taking into consideration the inclination of the electronic apparatus; and
controlling the electronic apparatus to perform an operation according to the recognized gesture command.

14. The non-transitory computer-readable storage medium of claim 13, wherein the recognizing of the gesture command comprises:
rotating the input image according to the inclination of the electronic apparatus; and
recognizing the gesture command from the rotated input image.

15. The non-transitory computer-readable storage medium of claim 13, wherein the recognizing of the gesture command comprises:
recognizing the gesture command by changing a direction of a previously defined gesture command according to the inclination of the electronic apparatus.
